Europäisches Patentamt

European Patent Office

Office européen des brevets

(19)

(11) Publication number: 0 303 403

A2

# (12) EUROPEAN PATENT APPLICATION

(21) Application number: 88307218.3

(51) Int. Cl.⁴: **C03C 8/02** , **C04B 41/86**

(22) Date of filing: **04.08.88**

(30) Priority: **10.08.87 JP 199510/87**
**10.08.87 JP 199511/87**

(43) Date of publication of application:
**15.02.89 Bulletin 89/07**

(84) Designated Contracting States:
**DE ES FR GB IT NL**

(71) Applicant: **INAX CORPORATION**
**3-6, Koiehonmachi**
**Tokoname-Shi Aichi(JP)**

(72) Inventor: **Hatanaka, Kimitatsu,**
**c/o INAX Corporation, 3-6, Koiehonmachi,**
**Tokoname-Shi, Aichi(JP)**
Inventor: **Sugiura, Akira**
**c/o INAX Corporation, 3-6, Koiehonmachi,**
**Tokoname-Shi, Aichi,(JP)**
Inventor: **Ohnuki, Tohru**
**c/o INAX Corporation, 3-6, Koiehonmachi,**
**Tokoname-Shi, Aichi,(JP)**

(74) Representative: **Jenkins, Peter David et al**
**Page White & Farrer 5 Plough Place New**
**Fetter Lane**
**London EC4A 1HY(GB)**

(54) Tile glaze, glazing method, and method of producing tiles.

(57) Disclosed herein are (1) a frit-containing tile glaze in the form of slip which has a specific gravity of 1.7 to 2.0 and a viscosity of 5 to 100 cp at 25°C; (2) a method of glazing green bodies of tile which comprises spraying one side of dried green bodies of tile with water in an amount of 0.002 to 0.015 $g/cm^2$ at a pressure of 1 $kg/cm^2$ or above and subsequently subjecting them to cascade glazing; and (3) a method of producing interior wall tile which comprises applying said tile glaze to green bodies by said glazing method, and firing the glazed green bodies.

# FIG.1

EP 0 303 403 A2

# TILE GLAZE, GLAZING METHOD, AND METHOD OF PRODUCING TILES

The present invention relates to a tile glaze, a glazing method, and a method of producing tiles. More particularly, it relates to a tile glaze used for the interior wall tile which is produced by single firing, to a method of glazing tiles, and to a method of producing tiles, by single firing.

Heretofore, it has been a common practice to produce interior wall tile by the process of so-called double firing in which the firing operation is performed twice. In other words, the conventional process for producing interior wall tile includes body forming, drying, first firing (biscuit firing), cooling, glazing, and secondary firing (gloss firing).

One of the reasons why interior wall tile is produced by double firing is that interior wall tile has to be glazed thicker than exterior wall tile so that a glossy glaze surface is formed. A large amount of glaze slip applied to the green body of interior wall tile causes water to infiltrate into the green body, and this water in turn expands (or deforms) the green body. On the other hand, the green body of tile is limited in water absorbing capacity, and this prevents as much glaze slip as necessary from remaining on the surface of the green body even though a large amount of glaze slip is applied to the green body. A possible solution to this problem is to reduce the content of water in a glaze slip. With a reduced water content, a glaze slip can be applied in a large amount to the green body, and yet the amount of water absorbed by the green body is small. This somewhat prevents the green body from swelling and permits the glaze slip to remain on the surface of the body in a comparatively large amount. In the case of conventional glaze slip, however, reducing the water content and hence increasing the specific gravity lead to a high viscosity, which makes it extremely difficult to apply the glaze slip uniformly all over the surface of the green body.

In other words, the conventional glaze slip is restricted by the fact that it cannot be used in the production of beautiful interior wall tile by the single firing process because it swells and deforms the green body and drips from the green body after application, without forming a uniform glaze layer.

In the case of double firing, a glaze slip is applied to biscuits, not to green bodies. Therefore, the glaze slip does not swell and deform the biscuit even though it is applied thickly. In addition, the glaze slip spreads on the surface of the biscuit uniformly and thickly because the water in the glaze slip is rapidly absorbed by the biscuit.

If a thickly glazed green body undergoes single firing, the thick glaze layer prevents the free passage of gases released from the green body during firing. This causes the gases to break the half molten or fully molten glaze layer, giving rise to bubbling which leads to voids and cracks in the glaze layer.

In the firing process, gases generate from green bodies as the result of thermal decomposition of carbonate minerals and combustion of organic substances. The gas generation depends on the firing conditions. If firing is performed by raising the firing temperature very slowly, the gas generation comes to an end at about 700 to 800°C. By contrast, in the efficient production by the use of a roller hearth kiln in which the firing temperature is raised rapidly, the gas generation continues to take place until the atmosphere temperature exceeds 1000°C because the inside of a body is slower in temperature rise than the surface of a body. At an ambient temperature of about 1000°C, the conventional tile glaze softens and melts to cover the surface of a body, and the molten glaze is subject to bubbling if gases generate from the inside of a body.

This drawback is absent in the double firing system, because the body to be fired for the second time is in the form of biscuit which release no gases in the second firing, and even a thick glaze layer covering a body is free of bubbling. Thus it is possible to produce interior wall tile with a glossy smooth glaze surface.

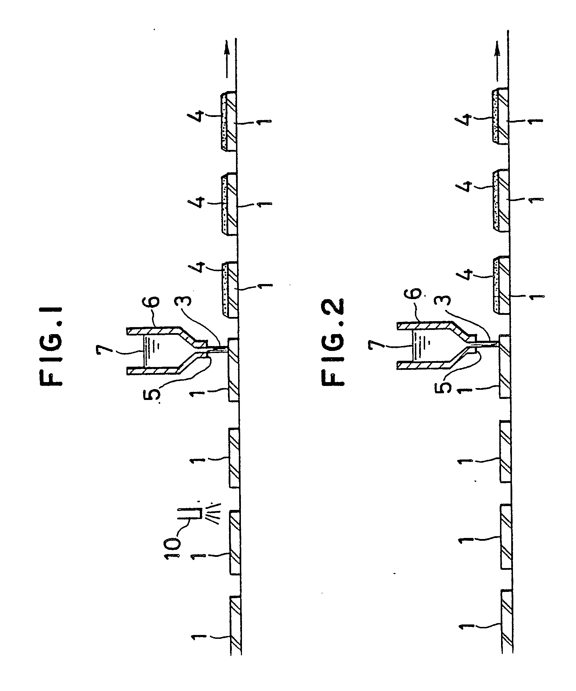

With the foregoing in mind, the present inventors developed a frit and glaze which do not cause bubbling even when used in the production of interior wall time by the single firing system. (See Japanese Patent Application Nos. 199508/1987 and 199509/1987.) Although the improved frit and glaze solved the problem of bubbling, there still exists another problem encountered in the application of the glaze. In other words, when glazing is performed by cascade glazing, the glaze layer has an uneven thickness and an irregular surface on account of entrapped bubbles. (Waterfall method is a glazing process, as shown in Fig. 2, in which the tile bodies 1 are conveyed continuously by a conveyor 2 through a "curtain" 3 of a glaze slip falling from a slit, so that a thick glaze layer 4 is formed on the top of the body. The "curtain" is formed by letting the glaze slip flow from the slit 5 of the supply tank 6 placed over the conveyor. The slit is arranged perpendicular to the direction of conveyance, and the supply tank is continuously replenish ed with the glaze 7 to keep a certain level.

The present invention provides a glaze slip for tiles which has a specific gravity of 1 7 to 2.0 and a viscosity of 5 to 100 cp (centi-poise) at 25°C.

The present invention further provides a tile glaze which comprises 100 parts by weight of the following glaze components (a) to (i) and 0 to 15 parts by weight of pigment.

    (a) Frit of the following composition:

50 to 90 parts by weight

| | |
|---|---|
| $SiO_2$ | 55 to 65 wt% |
| $Al_2O_3$ | 10 to 18 wt% |
| CaO | 18 to 25 wt% |
| Alkali metal oxides | 0.5 to 4 wt% |
| $ZrO_2$ | 0 to 10 wt% |
| $B_2O_3$ | 0 to 2 wt% |

One or more of MgO, BaO, SrO, and ZnO 0 to 10 wt% in total

    (b) Feldspar:    10 to 25 parts by weight

    (c) Clay:    0.5 to 10 parts by weight

    (d) Zircon:    0 to 20 parts by weight

    (e) Quartz:    0 to 10 parts by weight

    (f) Alumina:    0 to 5 parts by weight

    (g) Titania:    0 to 10 parts by weight

    (h) Barium carbonate:    0 to 10 parts by weight

    (i) Zinc oxide 0 to 5 parts by weight

The present invention also provides a glazing method which comprises spraying ne side of dried green bodies of tile with water in an amount of 0.002 to 0.015 $g/cm^2$ at a pressure of 1 $kg/cm^2$ or above and subsequently subjecting them to waterfall method.

The present invention further provides a method of forming interior wall tile which comprises the steps of forming and drying green bodies of tile, spraying one side of them with water in an amount of 0.002 to 0.015 $g/cm^2$ at a pressure of 1 $kg/cm^2$ or above, subsequently subjecting them to waterfall method with a proper amount of a glaze slip for tile which has a specific gravity of 1.7 to 2.0 and a viscosity of 5 to 100 cp at 25°C, drying the glazed green bodies, firing the dried glazed green bodies so that the green bodies become sintered bodies with an adequate strength for interior wall tile and the glaze melts to uniformly cover the surface of the sintered bodies, and finally cooling the sintered bodies.

Embodiments of the present invention will now be described by way of example only with reference to the accompanying drawings, in which:-

Fig. 1 is a sectional view showing the glazing methods of the present invention. Fig. 2 is a sectional view showing the conventional glazing method.

The tile glaze of the present invention should have a specific gravity in the range of 1.7 to 2.0. With a specific gravity in this specified range, the glaze contains an adequate amount of water, which prevents the green body from absorbing excessive water to swell and deform. In addition, the glaze containing an adequate amount of water remains thick on the surface of the green body, making thick glazing possible. With a specific gravity lower than 1.7, the glaze contains an excessive amount of water, which causes swelling and deformation. Thus it does not enable thick glazing. With a specific gravity higher than 2.0, the glaze is lacking in water. Thus it does not enable smooth, thick glazing. For this reason, it is necessary in this invention that the glaze should have a specific gravity in the range of 1.7 to 2.0.

The tile glaze of the present invention should have a viscosity in the range of 5 to 100 cp. With a viscosity higher than 100 cp, the glaze is too viscous to give a uniform, smooth glazed surface. With a viscosity lower than 5 cp, the glaze does not meet the above-mentioned requirements for high specific gravity. For this reason, it is necessary in this invention that the glaze should have a viscosity in the range of 5 to 100 cp, preferably 10 to 40 cp.

The desired specific gravity and viscosity can be readily obtained by suspending a frit of proper composition, feldspar, clay, zircon (zirconium silicate), etc. in water, alcohol, or other adequate liquid by the aid of a proper suspending agent. The suspending agent may be selected from those of carboxylic acid type, phosphoric acid type, and humic acid type which are commercially available. An example of commercial products is an aqueous solution of special polycarboxylic acid (KE-512, a product of Gasu Kagaku Kogyo Co Ltd.).

In the meantime, the reason why interior wall tile is produced conventionally by the double firing process is as follows: As mentioned earlier, interior wall tile has to be glazed thicker than exterior wall tile. If a thickly glazed green body undergoes single firing, the thick glaze layer prevents the free passage of gases released from the green body during firing. This causes the gases to break the half molten or fully molten glaze layer, giving rise to bubbling which leads to voids and cracks in the glaze layer.

In the firing process, gases generate from green bodies as the result of thermal decomposition of carbonate minerals and combustion of organic substances. The gas generation depends on the firing conditions. If firing is performed by raising the firing temperature very slowly, the gas generation comes to an end at about 700 to 800°C. By contrast, in the efficient production by the use of a roller hearth kiln in which the firing temperature is raised rapidly, the gas generation continues to take place until the atmosphere temperature exceeds 1000°C because the inside of a body is slower in temperature rise than the surface of a body. At an atmosphere temperature of about 1000°C, the conventional tile glaze softens and melts to cover the surface of a body, and the molten glaze is subject to bubbling if gases generate from the inside of a body.

This drawback is absent in the double firing system, because the body to be fired for the second time is in the form of biscuit which gives off no gases in the second firing, and even a thick glaze layer covering a body is free of bubbling. Thus it is possible to produce interior wall tile with a glossy smooth glazed surface.

As mentioned above, the conventional glaze is not suitable for the production of interior wall tile by single firing because it is subject to bubbling which leads to a defective surface. Therefore, interior wall tile has conventionally been produced by the double firing system, which needs more fuel and labor for firing and hence is poor in productivity.

The tile glaze of the present invention is capable of thick glazing, without bubbling even in the single firing process. It is composed of 100 parts by weight of the following components (a) to (i) and 0 to 15 parts by weight of pigment.

(a) Frit of the following composition:

50 to 90 parts by weight

$SiO_2$      55 ~ 65 wt%

$Al_2O_3$      10 ~ 18 wt%

CaO      18 ~ 25 wt%

Alkali metal oxides      0.5 - 4 wt%

$ZrO_2$      0 ~ 10 wt%

$B_2O_3$      0 ~ 2 wt%

One or more of MgO, BaO, SrO, and ZnO

0 ~ 10 wt% in total

(b) Feldspar:      8 to 25 parts by weight

(c) Clay:      0.5 to 10 parts by weight

(d) Zircon:      0 to 20 parts by weight

(e) Quartz:      0 to 10 parts by weight

(f) Alumina:      0 to 5 parts by weight

(g) Titania:      0 to 10 parts by weight

(h) Barium carbonate:      0 to 10 parts by weight

(i) Zinc oxide:      0 to 5 parts by weight

The frit in the tile glaze contains alkali metal oxides and $B_2O_3$ in very small amounts; therefore, it decreases in viscosity very slowly even when heated above its softening point and it does not cover the entire surface of a body until it is heated far above its softening point. The same holds true for other components. This means that gases released from a green body easily pass through the particles of the frit without causing bubbling.

The following is a detailed description of each component and preferred embodiments of the tile glaze of the present invention.

The frit (a) contains $SiO_2$ and $Al_2O_3$ as the major constituents which are responsible for the high softening point of the frit. They constitute the network of alumina silicate glass.

The frit (a) also contains CaO and alkali metal oxides (abbreviated as $R_2O$ hereinafter) which partly break the network of alumina silicate glass and promote the vitrification, thereby lowering the softening point of the frit.

According to the present invention, the frit (a) should preferably contain 55~65 wt% of $SiO_2$, 10~18 wt% of $Al_2O_3$, 18~25 wt% of CaO, and 0.5~4 wt% of $R_2O$. With their content outside the specified range, the frit will have an excessively low softening point, which leads to bubbling, or the frit will have an excessively high softening point, which leads to a situation in which the glaze does not melt completely although the body is in the thoroughly sintered state. The preferred range of content is 60~64 wt% for $SiO_2$, 12~16 wt% for $Al_2O_3$ 19~23 wt% for CaO, and 1~3 wt% for $R_2O$. The frit may optionally contain $Li_2O$ so that the glaze provides as smooth a surface as in the case of double firing. The content of $Li_2O$ should preferably be 0.5 to 1.5 wt%. With less than 0.5 wt%, it does not contribute to the smooth glazed surface; and with more than 1.5 wt%, it causes pinholes to the glazed surface.

The frit (a) may optionally contain $B_2O_3$, MgO, ZnO, SrO, and BaO, according to need. These oxides lower the softening point of the frit; however, if contained excessively, they lower the softening point to such an extent that the frit suddenly decreases in viscosity when it softens. The preferred content is less than 2 wt%, especially less than 1 wt% for $B_2O_3$ less than 5 wt%, especially less than 3 wt% for MgO, less than 5 wt%, especially less than 3 wt% for ZnO, less than 5%, especially less than 3% for SrO, and less than 5 wt%, especially less than 3 wt% for BaO. The total amount of MgO, BaO, SrO, and ZnO should be 10 wt% or less.

The frit (a) may optionally contain 10 wt% or less of $ZrO_2$, to impart a hiding power to the glaze.

The frit (a) may further contain other oxides (e.g., BaO), chlorides, and sulfates, if necessary. Their total amount should be less than 3 wt%, especially less than 1 wt%.

The frit (a) can be produced by mixing the ordinary frit raw materials, melting them, and cooling and crushing the resulting mixture. For example, the production process comprises crushing dried raw materials such as feldspar, silica stone, and limestone, screening the powder, and melting the powder at 1300~1500°C for 1~1.5 hours, followed by quenching.

Feldspar (b) and clay (c) raise the melting point of the glaze. For the glaze to have an adequate melting point, the content of feldspar should be 8~25 parts by weight, preferably 15~21 parts by weight, and the content of clay (e.g., kaolin and Gaerome clay) should be 0.5~10 parts by weight, preferably 2~4 parts by weight.

Zircon (zirconium silicate) (d) imparts a hiding power to the glaze. The content of zircon should be 0~20 parts by weight, preferably 10~15 parts by weight.

Quartz (e), alumina (f), titania (g), barium carbonate (h), and zinc oxide (i) control the melting point of the glaze and the gloss of the glazed surface. Their content should be 0~10 parts by weight for quartz, 0~5 parts by weight for alumina, 0~10 parts by weight for titania, 0~10 parts by weight for barium carbonate, and 0~5 parts by weight for zinc oxide.

The pigment is added, if necessary, to improve the design of the glazed surface of tile. Any pigment used for tile is acceptable for this purpose. The amount of the pigment should be 0~15 parts by weight for 100 parts by weight of the total amount of components (a) to (i).

The glaze of the present invention nay preferably be applied to green bodies of tile by waterfall method. Waterfall method is a glazing process, as shown in Fig. 2, in which the green bodies 1 are conveyed continuously by a conveyor 2 through a "curtain" 3 of a glaze slip falling from a slit, so that a thick glaze layer 4 is formed on the top of the body. The "curtain" is formed by letting the glaze slip flow from the slit 5 of the supply tank placed over the conveyor. The slit is arranged perpendicular to the direction of conveyance, and the supply tank is continuously replenished with the glaze 7 to keep a certain level.

The ordinary waterfall method as shown in Fig. 2 is not the only way of applying the glaze of the present invention. It is also possible to use the glazing method mentioned later so as to form a uniform, smooth glaze layer.

The tile glaze of the present invention have a high specific gravity in the range of 1.7 to 2.0 and contains solids in a high concentration. Therefore, the glaze contains an adequate amount of water, which prevents the green body from absorbing excessive water to swell and deform. In addition, the glaze containing an adequate amount of water remains thick on the surface of the green body, making thick glazing possible at one time. The tile glaze of the present invention have a comparatively low viscosity in the range of 5 to 100 cp. Therefore, it can be uniformly applied thick with ease.

Thus the tile glaze of the present invention makes it possible to produce interior wall tile having a thick beautiful glaze layer by the single firing process. This leads to a great reduction in production cost for interior wall tile.

According to the present invention, the glazing is accomplished as explained in the following with reference to Fig. 1 which is a sectional view illustrating an embodiment of the present invention.

At first, green bodies of tile are formed and dried. Dried green bodies have an adequate strength and also have resistance to warpage which would otherwise occur at the time of glazing. The dried green bodies being transferred by the conveyor 2 are sprayed with water by means of the spray nozzle 10. The amount of spraying water is 0.002 to 0.015 $g/cm^2$ (or 0.2 to 1.5 g for the surface area of each green body measuring 10 x 10 cm). The pressure of spraying water is 1 $kg/cm^2$ or higher.

Spraying water in an amount less than 0.002 $g/cm^2$ is not enough to produce the effect of making the green body to absorb water uniformly and thereby making the glaze to spread evenly on the surface of the green body. Conversely, spraying water in excess of 0.015 $g/cm^2$ does not permit satisfactory glazing. Therefore, according to the present invention, the amount of spraying water should be in the range of 0.002 to 0.015 $g/cm^2$.

With a spray pressure lower than 1 $kg/cm^2$, the sprayed waterdrops are too large to provide a smooth glazed surface. Therefore, according to the present invention, the spray pressure should be higher than 1 kg/cm², preferably in the range of 2 to 6 kg/cm². The sprayed waterdrops should be about 10 μm or below in diameter so that they are uniformly distributed on the surface of the green body.

The green bodies 1 which have been sprayed with a prescribed amount of high-pressure water are further moved forward by the conveyor 2 and passes through the curtain 3 of the glaze slip which is arranged perpendicular to the direction of conveyance. In this way, a thick glaze layer 4 is formed on the top of the green body 1.

Glazing should be performed before the sprayed water completely infiltrates into and volatilizes from the surface of the green body 1. In other words, at least a portion of the sprayed water should remain at the time of glazing. To meet this requirement, proper adjustment should be made for the conveyor speed and the positions of the nozzle 10 and slit opening. In addition, the green bodies 1 should be kept at 50° C or below when they are sprayed with water, so that at least a portion of the sprayed water remains, without drying and volatilizing, on the surface of the green body 1 at the time of glazing. To meet this requirement, proper adjustment should be made for the conveyor speed and the distance between the drying station and the spray nozzle 10.

According to the present invention, the tile glaze is composed of 100 parts by weight of the above-mentioned components (a) to (i) and 0 to 15 parts by weight of pigment. It effectively prevents the bubbling as mentioned above. In addition, it should have a specific gravity of 1.7 to 2.0 and a viscosity of 5 to 100 cp at 25° C so that it permits thick glazing.

An advantage of the above-mentioned cascade glazing is that air bubbles are not entrapped at all in the glaze layer. It is considered to be ascribed to the high-pressure spraying of a proper amount of water which moistens the surface of the green body uniformly and adequately, improving the affinity of the surface of the green body for the curtain of the glaze slip.

It is further considered that the fine waterdrops sprayed on the surface of the green body eliminate the uneven distribution of water absorptivity resulting from the uneven distribution of raw material particles and pressing pressure, thereby making the glaze surface smoother.

According to the present invention, it is possible to produce interior wall tile having a uniformly thick, smooth, beautiful glaze layer by the single firing process. This leads to a great reduction in production cost for interior wall tile.

The following procedure is employed to prepare the tile glaze and to produce interior wall tile according to the present invention. At first, the above-mentioned components (a) to (i) and optional pigment and other components in prescribed amounts are mixed by ball milling. To 100 parts by weight of this mixture are added 30~45 parts by weight of water and 0.05~0.50 parts by weight of suspending agent. Thus there is obtained a glaze slip having a specific gravity of 1.7 to 2.0 and a viscosity of 5 to 100 cp at 25° C.

The thus obtained tile glaze is used for the production of interior wall tile as follows: At first, tile bodies are formed by the ordinary forming method (such as pressing). To the tile bodies is applied the above-mentioned tile glaze in such an amount that the glaze thickness after drying is 0.1 to 2 mm, preferably 0.3 to 1 mm, by cascade glazing mentioned above. In other words, the green bodies of tile are sprayed with water in an amount of 0.002 to 0.015 g/cm² at a pressure higher than 1 kg/cm², and then coated with the above-mentioned glaze slip by cascade glazing. After glazing, the tile bodies are dried and then fired. The firing should preferably be performed by means of a roller hearth kiln in which the firing zone is kept at 1150~1250° C. The firing turns the green bodies into the sintered bodies having a strength for interior wall tile. During the firing, the bodies are sintered first and then the glaze melts to cover the surface of the bodies in uniform thickness. The fired tile is removed from the roller hearth kiln and is ready for shipment after packaging.

The invention will be described in more detail with reference to the following examples and comparative examples, in which experiments were carried out with green bodies of tile measuring 10 x 10 x 0.5 cm which were produced by forming at 350 kg/cm² from a ball-milled mixture composed of 45 parts by weight of agalmatolite, 40 parts by weight of clay, 10 parts by weight of limestone, and 5 parts by weight of chamotte, followed by drying. The green bodies were fired in a roller hearth kiln, 25 meters long, at a speed of 1.0 m/min, with the maximum temperature in the firing zone kept at 1190° C.


*Examples 1 to 8 and Comparative Examples 1 to 4*

Three kinds of frits were prepared from feldspar, quartz, and limestone by drying, milling, sieving, melting in a crucible at 1400° C for 1 hour, and quenching. The chemical compositions of the frits are shown in Table 1.

6

Table 1

| Chemical Composition of Frits (wt%) | | | |
|---|---|---|---|
| Frit No. | 1 | 2 | 3 |
| $SiO_2$ | 61.4 | 61.4 | 63.4 |
| $Al_2O_3$ | 14.0 | 14.0 | 12.0 |
| CaO | 24.1 | 22.6 | 19.6 |
| $Na_2O$ | 0.5 | - | 1.0 |
| $K_2O$ | - | 0.5 | - |
| $Li_2O$ | - | 0.5 | 1.0 |
| $ZrO_2$ | - | - | - |
| $B_2O_3$ | - | - | 1.0 |
| ZnO | - | 1.0 | 2.0 |

The frit was crushed together with feldspar, clay, and zircon by ball-milling according to the formulation shown in Table 2. The resulting mixture was suspended in water by ball-milling by the aid of a suspending agent of carboxylic acid type in an amount shown in Table 2. Thus there were obtained glaze slips each having the specific gravity and viscosity as shown in Table 2.

This glaze slip was applied to the above-mentioned green bodies of tile by waterfall method in such an amount that the glaze thickness after drying was about 0.6 mm. After drying, the glazed bodies were fired in a roller hearth kiln having a firing zone kept at 1190° C.

Thus there were obtained interior wall tile of high quality having a smooth, thick, glossy glaze layer free of bubbling in Examples 1 to 8.

On the other hand, bubbling occurred in Comparative Examples 1 to 3 and the fired tile was lacking gloss in Comparative Example 4. Thus it was confirmed that the tile glazes in Comparative Examples do not provide interior wall tile of practical use when used in the single firing process.

Table 2

EP 0 303 403 A2

| (Formulation of glaze:parts by weight) | | | | | | | | | | | | | | | |
|---|---|---|---|---|---|---|---|---|---|---|---|---|---|---|---|
| Example | Frit No. | Frit | Feldspar | Clay | Zircon | Quartz | Alumina | Titania | Barium carbonate | Zinc oxide | Pigments*[1] | Water*[2] | Suspending agent*[3] | Specific gravity | Viscosity (cp) |
| 1 | 3 | 68 | 17 | 2 | 13 | - | - | - | - | - | Silicate pigment 0.5 | 33 | 0.20 | 1.85 | 80 |
| 2 | 2 | 60 | 21 | 2 | 13 | - | - | - | - | 4 | Silicate pigment 1.0 Double oxide pigment 0.5 | 37 | 0.20 | 1.80 | 30 |
| 3 | 2 | 55 | 20 | 2 | 10 | 10 | 3 | - | - | - | - | 40 | 0.10 | 1.74 | 60 |
| 4 | 3 | 80 | 15 | 5 | - | - | - | - | - | - | Double oxide pigment 10.0 Silicate pigment 3.0 | 30 | 0.25 | 1.93 | 80 |
| 5 | 1 | 60 | 20 | 2 | 10 | - | - | 8 | - | - | Single oxide pigment 0.5 Metal oxide 0.5 | 45 | 0.05 | 1.70 | 30 |
| 6 | 3 | 55 | 20 | 2 | 10 | 4 | 2 | - | 7 | - | Silicate pigment 1.0 | 30 | 0.3 | 1.93 | 30 |
| 7 | 1 | 50 | 25 | 2 | 15 | 2 | 2 | - | - | 4 | Silicate pigment 10.0 | 40 | 0.25 | 1.74 | 20 |
| 8 | 2 | 70 | 10 | 4 | 5 | 10 | 1 | - | - | - | Silicate pigment 10.0 Single oxide pigment 3.0 | 33 | 0.50 | 1.85 | 10 |
| (1) | 3 | 90 | 8 | 2 | - | - | - | - | - | - | - | 50 | 0.0 | 1.65 | 130 |
| (2) | 2 | 70 | - | 5 | 10 | 15 | - | - | - | - | Silicate pigment 2.0 | 50 | 0.05 | 1.65 | 20 |
| (3) | 1 | 70 | - | 5 | - | - | - | 15 | - | 5 | Silicate pigment 1.5 Metal oxide 1.5 | 25 | 0.40 | 2.10 | 200 |
| (4) | 3 | 50 | 30 | - | 13 | 5 | 2 | - | - | - | Silicate pigment 1.5 | 25 | 0.60 | 2.10 | 130 |
| Comparative Examples are indicated by parenthesized numbers. | | | | | | | | | | | | | | | |

*[1] Parts by weight for 100 parts by weight of glaze components.
*[2] wt%
*[3] Parts by weight for 100 parts by weight of glaze components.

*Examples 9 to 11 and Comparative Examples 5 and 6*

A frit was prepared from feldspar, quartz, and limestone by drying, milling, sieving, melting in a crucible at 1300°C for 1 hour, and quenching. The chemical composition of the frit is shown in Table 3.

Table 3

| Chemical Composition of Frit (wt%) | |
| --- | --- |
| $SiO_2$ | 63.4 |
| $Al_2O_3$ | 12.0 |
| CaO | 19.6 |
| $Na_2O$ | 1.0 |
| $Li_2O$ | 1.0 |
| $B_2O_3$ | 1.0 |
| ZnO | 2.0 |

Seventy parts by weight of this frit was mixed with 15 parts by weight of feldspar, 2 parts by weight clay, and 13 parts by weight of zircon by ball-milling. The resulting mixture was crushed together with 33 parts by weight of water and 0.2 parts by weight of suspending agent (carboxylic acid type) by ball-milling. Thus there was obtained a glaze slip.

This glaze slip was applied to the green bodies of tile according to the method shown in Fig. 1. At first, the green bodies of tile were sprayed with water from the spray nozzle *10*. The amount and pressure of spray are shown in Table 4. Before the green bodies completely absorbed the sprayed water, they underwent waterfall method in such an amount that the glaze thickness after drying was about 0.6 mm. Incidentally, the waterdrops of the sprayed water were about 10 µm in diameter and the green bodies were kept at 40°C at the time of water spraying.

The glazed bodies were dried and fired. The glazed surface was examined for smoothness by means of a surface roughness tester. The results are shown in Table 4.

*Comparative Example 7*

The same procedure as in Example 1 was repeated except that water spraying was not performed. The resulting glaze surface was examined for smoothness. The results are shown in Table 4.

It is noted from Table 4 that the method of the present invention provides a smooth glazed surface of uniform thickness.

Table 4

| Example No. | Amount of spray water (g/cm$^2$) | Pressure of spray water (kg/cm$^2$) | Smoothness* |
|---|---|---|---|
| Example 9 | 0.005 | 5 | 10 μm |
| Example 10 | 0.007 | 6 | 5 μm |
| Example 11 | 0.005 | 2 | 15 μm |
| Compar. Example 5 | 0.001 | 0.5 | 70 μm |
| Compar. Example 6 | 0.02 | 0.7 | 40 μm |
| Compar. Example 7 | - | - | 100 μm |

* Surface irregularities in terms of the difference (μm) between the highest part and the lowest part.

The preferred embodiments of the present invention can provide a tile glaze that can be used for producing an interior wall tile having a fine, thick, smooth glaze layer by a single firing process.

The preferred embodiments of the present invention can also provide a method for cascade glazing which does not cause the entrapment of bubbles.

The preferred embodiments of the present invention can further provide a glazing method that can be used for producing an interior wall tile having a fine, thick, smooth glaze layer by a single firing process.

The preferred embodiments of the present invention can additionally provide a tile glaze, a glazing method, and a method of producing a tile which enables the efficient and economical production of interior wall tiles.

## Claims

1. A frit-containing tile glaze in the form of slip which has a specific gravity in the range of 1.7 to 2.0 and a viscosity in the range of 5 to 100 cp at 25° C.

2. A tile glaze set forth in Claim 1 wherein the frit is composed of the following components.

$SiO_2$    55 to 65 wt%

$Al_2O_3$    10 to 18 wt%

CaO    18 to 25 wt%

Alkali metal oxides    0.5 to 4 wt%

$ZrO_2$    0 to 10 wt%

$B_2O_3$    0 to 2 wt%

One or more of MgO, BaO, SrO, and ZnO

0 to 10 wt% in total

3. A tile glaze set forth in Claim 2, wherein the frit contains 60 to 64 wt% of $SiO_2$, 12 to 16 wt% of $Al_2O_3$, 19 to 23 wt% of CaO and 1 to 3 wt% of alkali metal oxides.

4. A tile glaze set forth in Claim 2, wherein the frit contains 0.5 to 1.5 wt% of $Li_2O$.

5. A tile glaze set forth in Claim 2, wherein the frit contains 2 wt% or less of $B_2O_3$, 5 wt% or less of MgO, 5 wt% or less of ZnO, 5 wt% or less of SrO, and 0.5 wt% or less of BaO.

6. A tile glaze which comprises 100 parts by weight of the following glaze components (a) to (i) and 0 to 15 parts by weight of pigment.

(a) Frit of the following composition:

50 to 90 parts by weight

$SiO_2$    55 to 65 wt%

$Al_2O_3$    10 to 18 wt%

CaO    18 to 25 wt%

Alkali metal oxides    0.5 to 4 wt%

$ZrO_2$    0 to 10 wt%

$B_2O_3$    0 to 2 wt%

One or more of MgO, BaO, SrO, and ZnO

0 to 10 wt% in total

(b) Feldspar: 10 to 25 parts by weight
(c) Clay: 0.5 to 10 parts by weight
(d) Zircon: 0 to 20 parts by weight
(e) Quartz: 0 to 10 parts by weight
(f) Alumina: 0 to 5 parts by weight
(g) Titania: 0 to 10 parts by weight
(h) Barium carbonate: 0 to 10 parts by weight
(i) Zinc oxide: 0 to 5 parts by weight

7. A tile glaze set forth in Claim 6, which contains 15 to 21 parts by weight of (b) feldspar, 2 to 4 parts by weight of (c) clay, and 10 to 15 parts by weight of (d) zircon.

8. A tile glaze set forth in Claim 1, which has a viscosity in the range of 10 to 40 cp at 25°C.

9. A method of glazing green bodies of tile which comprises spraying one side of dried green bodies of tile with water in an amount of 0.002 to 0.015 g/cm² at a pressure of 1 kg/cm² or above and subsequently subjecting them to cascade glazing.

10. A method of glazing green bodies of tile set forth in Claim 9, wherein water is sprayed at a pressure of 2 to 6 kg/cm².

11. A method of glazing green bodies of tile set forth in Claim 9, wherein water is sprayed such that the waterdrops are 10 μm or below in diameter.

12. A method of glazing green bodies of tile set forth in Claim 9, wherein the green bodies of tile are kept at 50°C or below at the time of water spraying.

13. A method of glazing green bodies of tile set forth in Claim 9, wherein cascade glazing is performed while at least a portion of the sprayed water remains on the surface of the green bodies of tile.

14. A method of producing interior wall tiles which comprises the steps of forming and drying green bodies of tile, spraying one side of them with water in an amount of 0.002 to 0.015 g/cm² at a pressure of 1 kg/cm² or above, subsequently subjecting them to cascade glazing with a proper amount of a glaze slip for tile which has a specific gravity of 1.7 to 2.0 and a viscosity of 5 to 100 cp at 25°C, drying the glazed green bodies, firing the dried glazed green bodies so that the green bodies become sintered bodies with an adequate strength for interior wall tile and the glaze melts to uniformly cover the surface of the sintered bodies, and finally cooling the sintered bodies.

15. A method for producing interior wall tiles set forth in Claim 14, wherein the firing is accomplished by conveying the green bodies through a roller hearth kiln.

EP 0 303 403 A2

# FIG.1

# FIG.2